# FASCICULE DE BREVET EUROPEEN

(11) **EP 0 756 983 B1**
(45) Date de publication et mention de la délivrance du brevet: **22.03.2000**
(21) Numéro de dépôt: 96401724.8
(22) Date de dépôt: 02.08.1996
(51) Int. Cl.: B62D 25/20, B62D 29/02

(54) **Plancher de carrosserie du véhicule et procédé pour assembler la carrosserie au châssis**
Fahrzeugbodenkonstruktion und Verfahren für die Verbindung zwischen dem Fahrzeugboden und dem Rahmen
Floor of a vehicle body and method for the connection between floor and the chassis

(30) Priorité: 04.08.1995 FR 9509525
(43) Date de publication de la demande: 05.02.1997
(73) Titulaire: ASCA CARROSSIER CONSTRUCTEUR, F-78680 Epone (FR)
(72) Inventeur: Momper, Jean-Luc, 37640 Villiers-en-Desoeuvre (FR); Deschamp, Roger, 92500 Rueil-Malmaison (FR)
(74) Mandataire: Schrimpf, Robert

(56) Documents cités:
- EP-A- 0 061 919
- DE-A- 2 157 784
- FR-A- 1 127 388
- US-A- 2 752 013

## Description

L'invention concerne un plancher de carrosserie de véhicule et son application à un procédé pour fabriquer un ensemble constitué par cette carrosserie et le châssis du véhicule.

Le plancher de la carrosserie d'un fourgon est habituellement posé sur un châssis qui comporte des traverses, sans lesquelles le plancher n'aurait pas la résistance longitudinale et transversale qu'il doit présenter. Cette conception classique impose de fabriquer la carrosserie et le châssis du véhicule par des opérations qui interfèrent entre elles.

La publication DE-A-2 157 784 décrit par exemple un plancher de carrrosserie de véhicule, constitué de panneaux de plancher non métalliques, chaque panneau ayant une longueur correspondant à la largeur de la carrosserie et chaque panneau présentant en sous face une feuillure ouverte sur une tranche longitudinale du panneau ou deux feuillures ouvertes respectivement sur l'une ou sur l'autre des deux tranches longitudinales du panneau.

Pour constituer le plancher, selon cette publication, des traverses sont d'abord soudées aux longerons du châssis du véhicule, après quoi les panneaux du plancher sont mis en place individuellement sur les traverses et vissés aux traverses.

Un but de l'invention est de fournir un nouveau plancher de véhicule qui présente une résistance intrinsèque transversale suffisante pour qu'il puisse être posé d'un seul tenant sur un châssis dépourvu des traverses traditionnelles.

Un autre but de l'invention est d'utiliser ce nouveau plancher pour fabriquer la carrosserie et le châssis indépendamment l'un de l'autre, et les assembler ensuite, ce qui facilite considérablement la fabrication et permet un gain de temps très important sur la technique traditionnelle.

On y parvient selon l'invention par le fait que les panneaux du plancher ont une résistance adéquate dans le sens de la longueur et sont assemblés de proche en proche par des plats métalliques disposés dans lesdites feuillures, chaque plat étant commun à deux panneaux et fixé aux panneaux par des vis mises en place depuis le dessus des panneaux, réalisant un plancher autoporteur d'un seul tenant.

D'autres avantages procurés par l'invention apparaîtront dans ce qui suit.

Ce plancher est préfabriqué en un seul tenant avant d'être fixé au châssis du véhicule et, avant cette fixation, la carrosserie peut être complétée en assemblant le plancher, les panneaux verticaux et le pavillon de la carrosserie. Des profilés sont avantageusement utilisés pour réaliser ces assemblages qui sont fixés par vissage et collage.

L'ensemble de la carrosserie ainsi réalisé est posé sur le châssis qui peut être simplifié par rapport aux châssis classiques puisque les traverses des châssis classiques sont devenues inutiles.

En fait, selon une solution préférée de l'invention, il suffit pour l'assemblage de la carrosserie et du châssis que ce dernier comporte deux longerons métalliques présentant des plats supérieurs, l'assemblage étant réalisé par soudage des plats sous-jacents du plancher de la carrosserie aux plats des longerons. Ce sont les longerons qui confèrent au plancher sa résistance longitudinale.

On décrira ci-après un exemple non limitatif de plancher conforme à l'invention en référence aux figures du dessin joint sur lequel :
- la fig. 1 est une vue en plan d'un panneau de plancher,
- la fig. 2 est une coupe transversale du panneau,
- la fig. 3 est une vue en plan de deux panneaux jointifs, limitée à la région d'assemblage,
- la fig. 4 est une vue en coupe transversale de deux panneaux jointifs, limitée à la région d'assemblage,
- la fig. 5 est une vue schématique en coupe verticale illustrant l'assemblage d'un panneau de plancher et d'un longeron de châssis,
- la fig. 6 est une vue en plan d'une bride de fixation du plancher au châssis du véhicule, et
- la fig. 7 est une coupe verticale du plancher et du châssis dans la région de la fixation au moyen d'une bride.

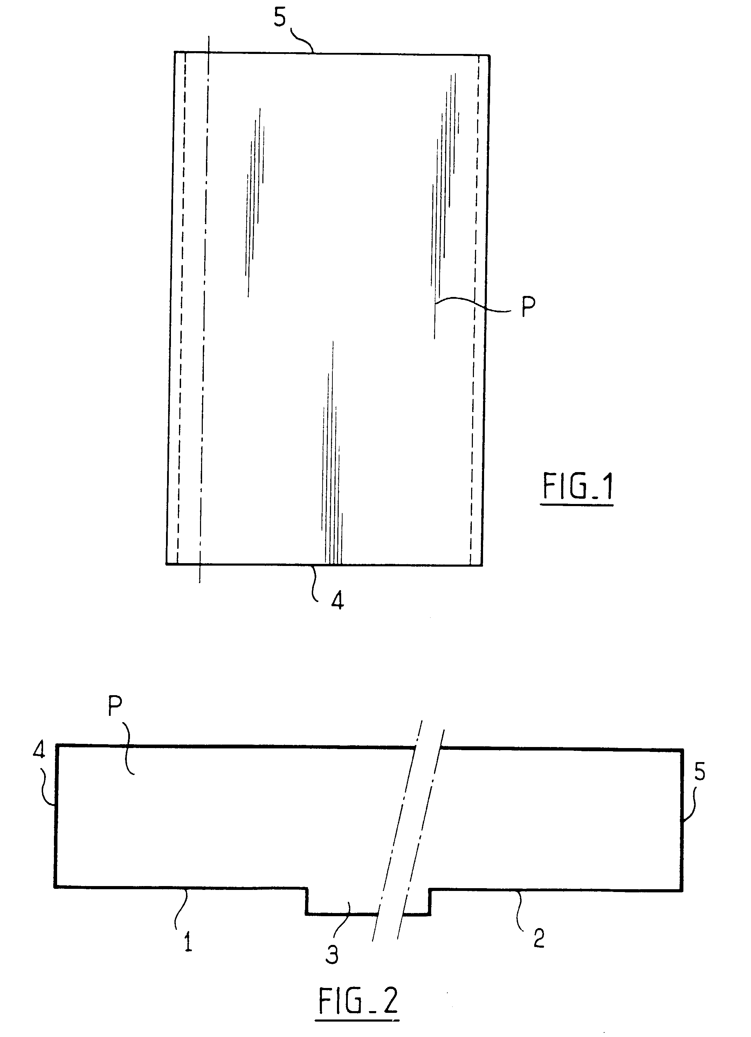

Le panneau de plancher P représenté sur les figures 1 et 2 est un panneau rectangulaire ayant par exemple une longueur de 2,50 m environ et une largeur de 1,50 m environ, les dimensions précises étant adaptées pour que les panneaux jointifs constituent la surface de plancher désirée.

Ce panneau comporte en sous face deux feuillures 1,2 qui laissent entre elle une bande de panneau 3 et qui débouchent latéralement sur chacune des tranches longitudinales 4,5 du panneau.

Le panneau a par exemple une épaisseur d'environ 40 mm, et la feuillure a par exemple une profondeur d'environ 6 mm, une largeur d'environ 60 mm et une longueur égale à celle du panneau.

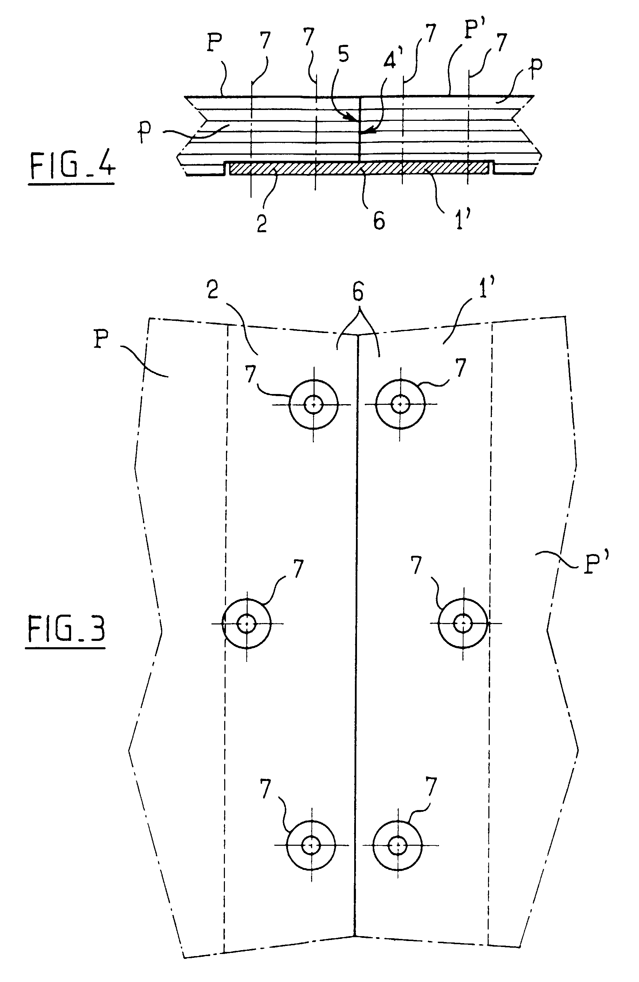

Le panneau est avantageusement un multiplis de bois dur, de préférence de hêtre, comme cela est schématisé sur la fig. 4 où l'on a indiqué les plis p.

Lorsque deux panneaux (P, P'), sont disposés jointifs tranche contre tranche (figs. 3 et 4), leurs feuillures jointives (2,1') communiquent et peuvent recevoir un plat métallique commun 6. Des vis 7 auto taraudeuses permettent de fixer les panneaux au plat en agissant depuis le dessus des panneaux.

On assemble ainsi de proche en proche tous les panneaux du plancher, obtenant un plancher autoporteur d'un seul tenant.

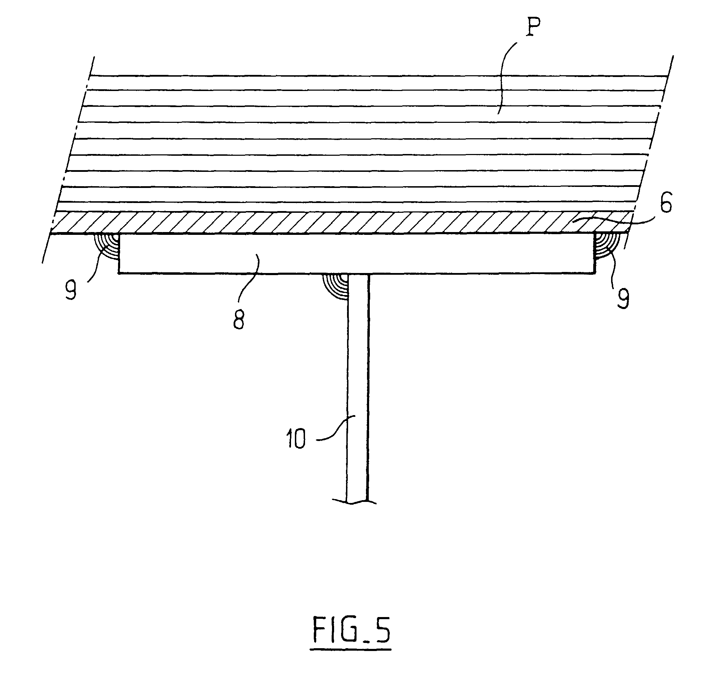

Pour assembler la carrosserie et le châssis du véhicule, on pose le plancher, de préférence après avoir assemblé le plancher et le reste de la carrosserie, sur le châssis que l'on a muni de longerons, de préférence deux longerons symétriquement disposés par rapport à l'axe du châssis et l'on soude de proche en proche les plats métalliques des panneaux aux longerons. La fig. 5 illustre cet assemble et montre en coupe transversale (par rapport à l'axe du véhicule) l'assemblage du plat 6 d'un panneau P au plat 8 d'un longeron du châssis par des soudures 9. Le plat de longeron 8 est lui-même soudé à une tôle verticale 10 qui constitue l'âme du longeron.

On remarquera qu'il est facile en service d'enlever un panneau du plancher, par exemple pour le remplacer, en dévissant le panneau en bois par une action exercée depuis le dessus du panneau, le plat (6) restant en place.

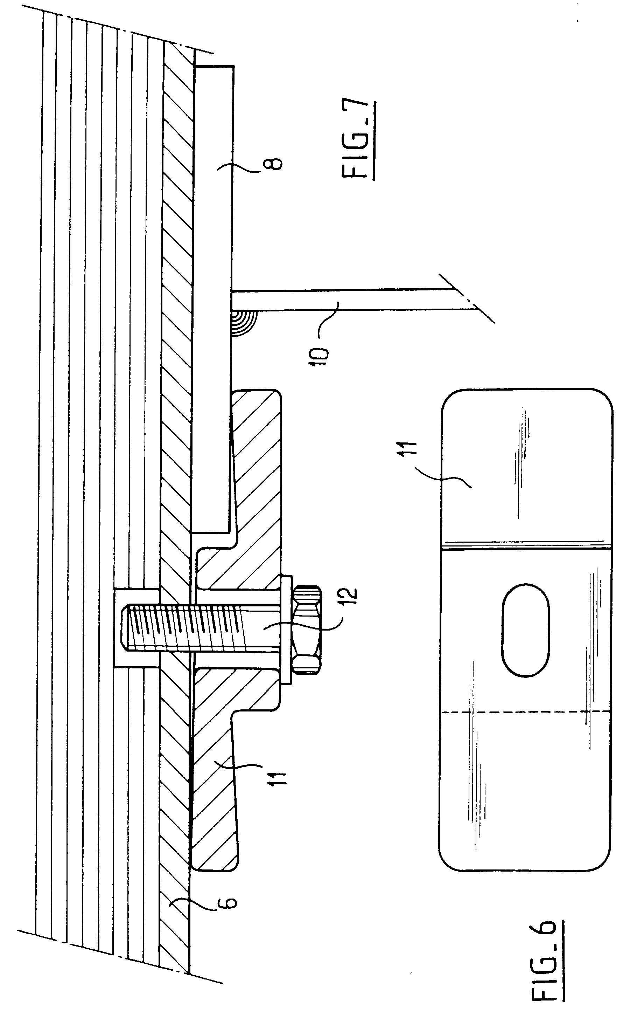

Dans une variante de fixation, le plancher est fixé aux longerons (10, 8) du véhicule aux moyens de brides 11 (fig. 6) qui sont fixées par des vis 12 mises en place depuis le dessous du plancher au travers des plats métaliques (6), ces brides étant conformées pour emprisonner entre elles entre la bride et la plaque le plat 8 du longeron (fig. 7).

L'invention s'applique notamment aux carrosseries de fourgons et autres véhicules utilitaires.

## Revendications

1. Plancher de carrosserie de véhicule, constitué de panneaux de plancher non métalliques (P), chaque panneau ayant une longueur correspondant à la largeur de la carrosserie et chaque panneau présentant en sous face une feuillure ouverte sur une tranche longitudinale du panneau ou deux feuillures (1,2) ouvertes respectivement sur l'une et sur l'autre des deux tranches longitudinales (4,5) du panneau, caractérisé en ce que les panneaux ont une résistance adéquate dans le sens de la longueur et sont assemblés de proche en proche par des plats métalliques (6) disposés dans lesdites feuillures, chaque plat métallique (6) étant commun à deux panneaux et fixé aux panneaux par des vis (7) mises en place depuis le dessus des panneaux, réalisant un plancher autoporteur d'un seul tenant.

2. Plancher selon la revendication 1, dans lequel les feuillures (1,2) ont la longueur du panneau (P).

3. Plancher selon la revendication 1 ou 2, dans lequel les panneaux (P) sont des multiplis de bois dur.

4. Procédé pour équiper d'un plancher le châssis d'un véhicule comportant au moins deux longerons métalliques (8,10) présentant chacun un plat supérieur (8), caractérisé en ce qu'on fabrique un plancher autoporteur tel que défini dans l'une des revendications 1 à 3, en ce qu'on pose le plancher préfabriqué sur les longerons du châssis et en ce qu'on fixe les plats métalliques (6) des panneaux du plancher aux plats supérieurs (8) des longerons.

5. Procédé selon la revendication 4, dans lequel avant de poser ledit plancher sur les longerons du châssis, on assemble le plancher, les panneaux verticaux et le pavillon de la carrosserie du véhicule.

6. Procédé selon l'une des revendications 4 et 5, dans lequel on fixe par soudure les plats métalliques (6), du plancher aux plats supérieurs (8) des longerons.

7. Procédé selon l'une des revendications 4 et 5, dans lequel on fixe des brides (11) au plancher par vissage à travers les plats métalliques (6) en sorte que les plats supérieurs (8) des longerons soient emprisonnés entre les brides et le plancher.

8. Véhicule dont le châssis a été équipé d'un plancher, éventuellement des panneaux verticaux et du pavillon de la carrosserie, par un procédé selon l'une des revendications 4 à 6.

## Patentansprüche

1. Bodenkonstruktion für Fahrzeuge, welche aus nicht-metallischen Bodenplatten (P) besteht, wobei jede Platte eine Länge aufweist, welche der Breite des Rahmens entspricht, und jede Platte auf ihrer Unterseite eine offene Falz auf einem Längsrand der Platte oder zwei offene Falzen (1,2) jeweils auf dem einen und dem anderen der beiden Längsränder der Platte aufweist, dadurch gekennzeichnet, daß die Platten einen in dem Längssinn adäquaten Widerstand aufweisen, und sie immer näher durch metallische Flachprofile (6) zusammengefügt werden, welche in den Falzen angeordnet werden, wobei jedes metallische Flachprofil zwei Platten gemeinsam und an den Platten durch Schrauben (7) befestigt ist, welche von der Oberseite der Platten eingedreht werden, wodurch ein selbsttragender Boden aus einem Stück, hergestellt wird.

2. Bodenkonstruktion gemäß Anspruch 1, bei welcher die Falzen (1,2) die Länge der Platte (P) aufweisen.

3. Bodenkonstruktion gemäß Anspruch 1 oder 2, bei welcher die Platten (P) Mehrlagensperrholz aus Hartholz sind.

4. Verfahren zur Anbringung einer Bodenkonstruktion an dem Rahmen eines Fahrzeugs, welcher wenigstens zwei metallische Längsträger (8,10) aufweist, welche jeweils ein oberes Flachprofil (8) umfassen, dadurch gekennzeichnet, daß eine selbsttragende Bodenkonstruktion, wie in einem der Ansprüche 1 bis 3 definiert, hergestellt wird, die vorgefertigte Bodenkonstruktion auf den Längsträgern des Rahmens angeordnet wird und die metallischen Flachprofile (6) der Platten der Bodenkonstruktion an den oberen Flachprofilen (8) der Längsträger befestigt werden.

5. Verfahren gemäß Anspruch 4, bei welchem vor der Anordnung der Bodenkonstruktion auf den Längsträgern des Rahmens der Boden, die vertikalen Platten und das Karosserieoberteil des Fahrzeugs zusammengefügt werden.

6. Verfahren gemäß einem der Ansprüche 4 und 5, bei welchem die metallischen Flachprofile (6) durch Verschweißung an den oberen Flachprofilen (8) der Längsträger befestigt werden.

7. Verfahren gemäß einem der Ansprüche 4 und 5, bei welchem Gurte (11) durch Verschraubung quer durch die metallischen Flachprofile (6) an dem Boden befestigt werden, so daß die oberen Flachprofile (8) der Längsträger zwischen den Gurten und dem Boden festgeklemmt sind.

8. Fahrzeug, dessen Rahmen durch ein Verfahren gemäß einem der Ansprüche 4 bis 6 mit einer Bodenkonstruktion, eventuell mit vertikalen Platten und dem Karosserieoberteil ausgestattet worden ist.

## Claims

1. Vehicle bodywork floor consisting of non-metallic floor panels (P), each panel having a length which corresponds to the width of the bodywork and each panel having, on its underside, a rebate which is open along a longitudinal edge face of the panel or two rebates (1, 2) which are open respectively along each of the two longitudinal edge faces (4, 5) of the panel, characterized in that the panels have adequate strength in the lengthwise direction and are assembled one with the next by flat metal bars (6) placed in the said rebates, each flat metal bar (6) being common to two panels and fixed to the panels by screws (7) screwed in from the top sides of the panels, producing a one-piece self-supporting floor.

2. Floor according to Claim 1, in which the rebates (1, 2) are the length of the panel (P).

3. Floor according to Claim 1 or 2, in which the panels (P) are hardwood ply.

4. Method for equipping with a floor the chassis of a vehicle comprising at least two metal longitudinal members (8, 10) each having an upper flat (8), characterized in that a self-supporting floor as defined in one of Claims 1 to 3 is fabricated, in that the prefabricated floor is placed on the longitudinal members of the chassis and that the flat metal bars (6) of the floor panels are fixed to the upper flats (8) of the longitudinal members.

5. Method according to Claim 4, in which prior to placing the said floor on the longitudinal members of the chassis, the floor, the vertical panels and the roof of the vehicle bodywork are assembled.

6. Method according to one of Claims 4 and 5, in which the flat metal bars (6) of the floor are fixed to the upper flats (8) of the longitudinal members by welding.

7. Method according to one of Claims 4 and 5, in which flanges (11) are fixed to the floor by screwing through the flat metal bars (6) so that the upper flats (8) of the longitudinal members are trapped between the flanges and the floor.

8. Vehicle, the chassis of which has been equipped with a floor, and possibly with vertical panels and the roof of the bodywork, using a method according to one of Claims 4 to 6.
